# EUROPEAN PATENT APPLICATION

(11) **EP 4 654 190 A1**
(43) Date of publication of application: **26.11.2025**
(21) Application number: 25153380.8
(22) Date of filing: 22.01.2025
(51) Int. Cl.: G11B 27/34, G11B 27/031

(54) **METHOD, APPARATUS, DEVICE, AND STORAGE MEDIUM FOR GENERATING MEDIA CONTENT**

(30) Priority: 21.05.2024 CN 202410634463
(71) Applicant: BEIJING YOUZHUJU NETWORK TECHNOLOGY CO. LTD., Beijing 101299 (CN)
(72) Inventor: Zeng, Yan, Beijing, 100028 (CN); Wei, Guoqiang, Beijing, 100028 (CN); Li, Yifu, Beijing, 100028 (CN); Chen, Xiaoya, Beijing, 100028 (CN); Lu, Quiang, Beijing, 100028 (CN); Li, Zheng, Beijing, 100028 (CN); Luo, Manping, Beijing, 100028 (CN)
(74) Representative: Grünecker Patent- und Rechtsanwälte PartG mbB

(57) **Abstract**

A method, an apparatus, a device, and a storage medium for generating media content are provided. The method proposed herein includes: in response to receiving a content generation request, presenting a configuration interface including at least a first input component and a second input component; obtaining a plurality of reference images via the first input component and a prompt item via the second input component; and generating a target media content based on the plurality of reference images and the prompt item, where the target media content includes a plurality of frames corresponding to the plurality of reference images. In this way, the user is supported to further control the generated target media content by inputting multiple reference images and prompt words, thereby improving quality of the generated target media content and enhancing user experience.

## Description

### FIELD

Example embodiments of the present disclosure generally relate to the field of computer, and in particular, to a method, an apparatus, a device, and a computer-readable storage medium for generating media content.

### BACKGROUND

With the development of computer technology, more and more applications can provide the function of generating media content, so as to attract more users to participate in the generation of media content and improve the sense of participation of the users. Therefore, the quality of generated media content has become a focus issue of attention.

### SUMMARY

In a first aspect of the present disclosure, a method for generating media content is provided. The method includes: in response to receiving a content generation request, presenting a configuration interface including at least a first input component and a second input component; obtaining a plurality of reference images via the first input component, and a prompt item via the second input component; and generating a target media content based on the plurality of reference images and the prompt item, where the target media content includes a plurality of frames corresponding to the plurality of reference images.

In a second aspect of the present disclosure, an apparatus for generating media content is provided. The apparatus includes: a presenting module configured to in response to receiving a content generation request, present a configuration interface including at least a first input component and a second input component; an obtaining module configured to obtain a plurality of reference images via the first input component, and a prompt item via the second input component; and a generating module configured to generate target media content based on the plurality of reference images and the prompt item, where the target media content includes a plurality of frames corresponding to the plurality of reference images.

In a third aspect of the present disclosure, an electronic device is provided. The device includes at least one processor and at least one memory. The at least one memory is coupled to the at least one processor and stores instructions for execution by the at least one processor. The instructions, when executed by the at least one processor, cause the device to perform the method of the first aspect.

In a fourth aspect of the present disclosure, a computer-readable storage medium is provided. The computer-readable storage medium is stored with a computer program executable by a processor to implement the method of the first aspect.

It should be understood that the content described in this content part is not intended to limit the key features or important features of the embodiments of the present disclosure, nor to limit the scope of the present disclosure. Other features of the present disclosure will become readily understandable through the following description.

### BRIEF DESCRIPTION OF THE DRAWINGS

The above and other features, advantages and aspects of various embodiments of the present disclosure will become more apparent when taken in conjunction with the drawings and with reference to the following detailed description. In the drawings, the same or similar reference numerals represent the same or similar elements, where:
FIG. 1 shows a schematic diagram of an example environment in which embodiments according to the present disclosure may be implemented;
FIG. 2A to FIG. 2D show example interfaces according to some embodiments of the present disclosure;
FIG. 3 shows a flowchart of an example process of generating media content according to some embodiments of the present disclosure;
FIG. 4 shows a schematic structural block diagram of an example apparatus for generating media content according to some embodiments of the present disclosure; and
FIG. 5 shows a block diagram of an electronic device capable of implementing multiple embodiments of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. On the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be noted that the title of any section/sub-section provided herein is not restrictive. Various embodiments are described throughout this document, and any type of embodiments may be included under any section/sub-section. In addition, the embodiments described in any section/sub-section may be combined with any other embodiments described in the same section/sub-section and/or different section/sub-section in any manner.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "this embodiment" should be understood as "at least one embodiment". The term "some embodiments" should be understood as "at least some embodiments". Other explicit and implicit definitions may be included below. The terms "first", "second", etc. may refer to different or the same objects. Other explicit and implicit definitions may also be included below.

The embodiments of the present disclosure may involve user data, data acquisition and/or use, etc. These aspects all follow corresponding laws, regulations and relevant regulations. In the embodiments of the present disclosure, the acquisition, acquisition, processing, processing, forwarding, use, etc. of all data are carried out under the premise that the user knows and confirms. Correspondingly, when implementing various embodiments of the present disclosure, the user should be informed of the type, use scope, use scenario, etc. of the data or information that may be involved, and obtain authorization from the user, in an appropriate manner in accordance with relevant laws and regulations. The specific way of informing and/or authorizing may vary according to actual situations and application scenarios, and the scope of the present disclosure is not limited in this aspect.

If the solutions in this specification and the embodiments relate to personal information processing, the processing will be performed on the premise of legality (for example, consent of the personal information subject is obtained, or it is necessary for the performance of a contract, etc.), and the processing will only be performed within the scope specified or agreed. The user refuses to process personal information other than the necessary information required for the basic functions, which will not affect the user's use of the basic functions.

According to the conventional solution, the user may generate the target media content in the form of one image or text description. However, the target media content generated in this way is less controllable and it is not easy to meet the requirements of the user for the generated target media content.

An embodiment of the present disclosure provides a solution for generating media content. According to this solution, a configuration interface may be presented in response to receiving a content generation request, where the configuration interface includes at least a first input component and a second input component; a plurality of reference images are obtained via the first input component, and a prompt item is obtained via the second input component; and target media content is generated based on the plurality of reference images and the prompt item, where the target media content includes a plurality of frames corresponding to the plurality of reference images.

In this way, the embodiments of the present disclosure can support the user to further control the generated target media content by inputting multiple reference images and prompt words, thereby improving quality of the generated target media content and enhancing user experience.

Various example implementations of the solution will be described in detail below with further reference to the drawings.

### Example environment

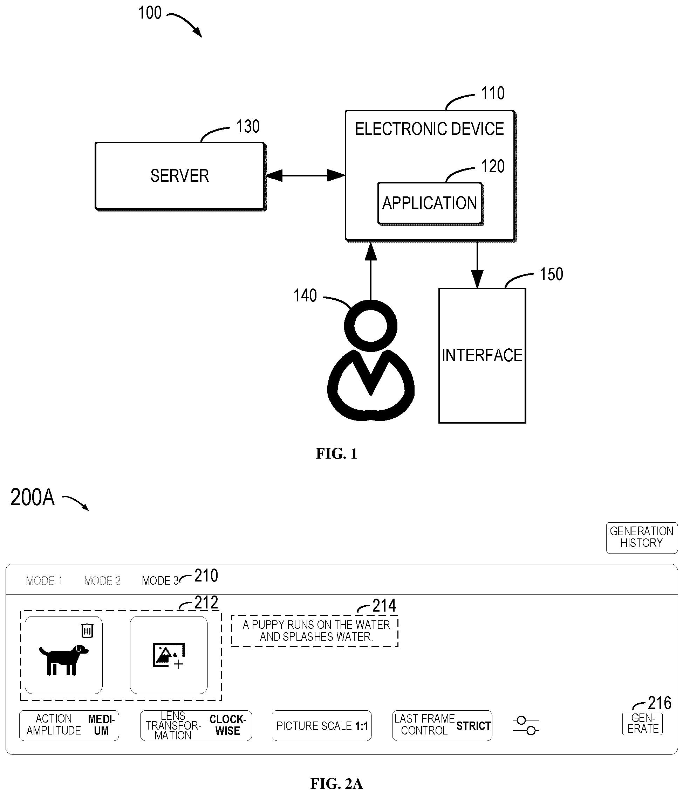

FIG. 1 shows a schematic diagram of an example environment 100 in which embodiments of the present disclosure can be implemented. As shown in FIG. 1, the example environment 100 may include an electronic device 110.

In the example environment 100, the electronic device 110 may be running an application 120 that supports interface interaction. The application 120 may be any suitable type of application for interface interaction, and examples thereof may include, but are not limited to, a video application, a social application or other suitable applications. The user 140 may interact with the application 120 via the electronic device 110 and/or its attached devices.

In the environment 100 of FIG. 1, if the application 120 is in an active state, the electronic device 110 may present an interface 150 for supporting interface interaction through the application 120.

In some embodiments, the electronic device 110 communicates with a server 130 to realize the supply of services to the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a game device, or any combination of the foregoing, including accessories and peripherals of these devices or any combination thereof. In some embodiments, the electronic device 110 may also support any type of interface for users (such as "wearable" circuits, etc.).

The server 130 may be an independent physical server, or a server cluster or distributed system composed of multiple physical servers, and may also be a cloud server that provides basic cloud computing services such as cloud service, cloud database, cloud computing, cloud function, cloud storage, network service, cloud communication, middleware service, domain name service, security service, content delivery network, and big data and artificial intelligence platforms. The server 130 may include, for example, a computing system/server, such as a mainframe, an edge computing node, a computing device in a cloud environment, and so on. The server 130 may provide background services for the application 120 that supports content presentation in the electronic device 110.

A communication connection may be established between the server 130 and the electronic device 110. The communication connection may be established by wire or wirelessly. The communication connection may include, but is not limited to, a Bluetooth connection, a mobile network connection, a universal serial bus connection, a wireless fidelity connection, etc., and the embodiments of the present disclosure are not limited in this aspect. In the embodiments of the present disclosure, the server 130 and the electronic device 110 may implement signaling interaction through the communication connection between them.

It should be understood that the structure and function of various elements in the environment 100 are described for exemplary purposes only, without implying any limitation to the scope of the present disclosure.

### Example interaction

The example process of generating media content according to the embodiments of the present disclosure will be described below with reference to the drawings.

FIG. 2A to FIG. 2D show example interfaces 200A to 200D according to some embodiments of the present disclosure. The interface 200A to the interface 200D may be provided by the electronic device 110 shown in FIG. 1.

FIG. 2A shows an example interface according to some embodiments of the present disclosure. As shown in FIG. 2A, the electronic device 110 may present a configuration interface 200A corresponding to a target mode 210 in response to receiving a content generation request in the target mode 210 among a plurality of candidate generation modes. The electronic device 110 configures media content to be generated based on the configuration interface 200A to obtain target media content.

It should be noted that the target media content involved in the present disclosure may be media content in any suitable form, such as video, image, audio, expression, etc., which will not be repeated here. For ease of understanding, video content will be used as an example for description below.

In some embodiments, the user may upload a plurality of reference images in a first input component 212 in the configuration interface 200A. For ease of description, uploading two reference images will be taken as an example for description below.

In some embodiments, the above-mentioned two reference images may be used as a reference start frame and a reference end frame of a to-be-generated target video to control the generation of the target video. As an example, the electronic device 110 uses a first reference image (for example, a first image) input by the user as the reference start frame of the to-be-generated target video, and uses a second reference image (for example, a second image) input by the user as the reference end frame of the to-be-generated target video.

In some embodiments, the two reference images may present the same or similar effect as the visual content in the target video. It may be understood that the above-mentioned two reference images may be included in the target video, or two similar images may be generated based on the above-mentioned two reference images to be used as the start frame and the end frame of the target video.

In some embodiments, the user may also modify the uploaded reference image. As an example, if the user is not satisfied with the currently uploaded reference image, the user may delete the current reference image and re-upload other reference images for modification.

In some embodiments, the electronic device 110 may determine the positions of the two reference images in the to-be-generated target based on the configuration operation of the user on the to-be-generated target video. As an example, the electronic device 110 may set the above-mentioned two reference images at any positions of the to-be-generated target video based on the indication of the user.

In some embodiments, as an example, when the user uploads three reference images, the second reference image may be set at a middle position or other positions of the to-be-generated target video.

In other embodiments, the present disclosure is not intended to limit the uploaded content, and the uploaded content may be, for example, video, audio and expression, etc.

In some embodiments, the user may also input a prompt (for example, a puppy runs on the water and splashes water) in the second input component 214 in the configuration interface 200A to further control the generation of the target video.

In some embodiments, the configuration interface 200A may further include a third input component, and the user may adjust at least one media parameter of the to-be-generated target video based on the third input component. As an example, the user may adjust the action amplitude (for example, small amplitude, medium amplitude, large amplitude, etc.) of the to-be-generated target video based on a first media parameter; the user may control the transformation of the lens of the to-be-generated target video (for example, clockwise, counterclockwise, lens zoom in, lens zoom out, etc.) based on a second media parameter; and the user may control the picture scale (for example, 1:1, 16:9, etc.) of the to-be-generated target video based on a third media parameter.

In some embodiments, the configuration interface 200A may further include a frame control component, and the frame control component is used to determine a target reference image in the two reference images as an end frame of the target video. In this way, the electronic device 110 may set a target control mode of the end frame, that is, the degree to which the end frame follows in the target video. As an example, when the user chooses to strictly follow, the picture of the end frame of the target video will be the same as the uploaded picture of the end frame. When the user chooses not to strictly follow, the end frame of the target video is allowed to have more room for play.

In some embodiments, the user may also control various things or scenes that are not allowed to appear in the to-be-generated target video. In this way, the electronic device 110 may further control the generation of the target video to make it more in line with the user's expectation.

In some embodiments, based on the above operations, the user may trigger the generation of the target video through a preset control 216. The user may select one of the two generated videos as the target video.

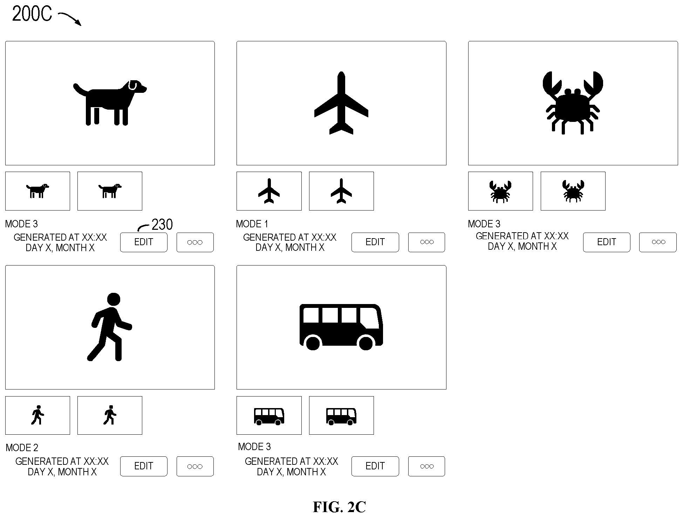

In some embodiments, the user may trigger the generation history of the video based on a preset control 224. The electronic device 110 may present, for example, a history interface 200C as shown in FIG. 2C. As an example, in this interface, the user moves the mouse over the cover of the group of videos to quickly preview the effect of the successfully generated video. Moreover, the user may continue to edit the generated video based on the edit control 230 of each group of videos.

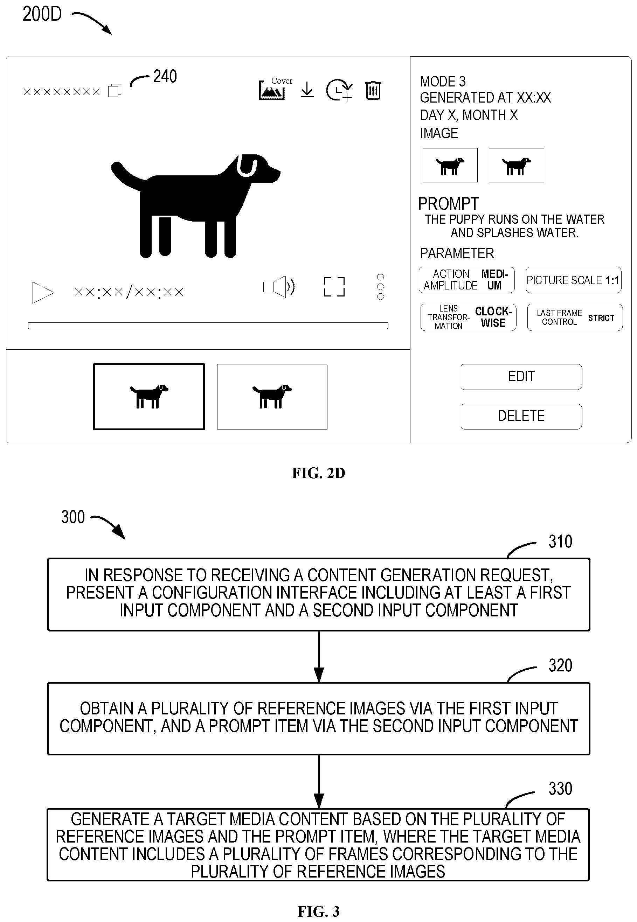

In some embodiments, the user may click on the video cover to view the detailed information page of the group of videos, and such a detailed information page may be presented, for example, in the form of a floating window or occupying the entire interface. Taking the floating window as an example, referring to FIG. 2D, such a detailed information page may include, for example, the generation time of the video, the prompt, the video parameters, etc. In addition, in the detailed information page, the user may select to extend, download or delete the generated video in the video preview window, and may also set the generated video as the cover of the group of videos.

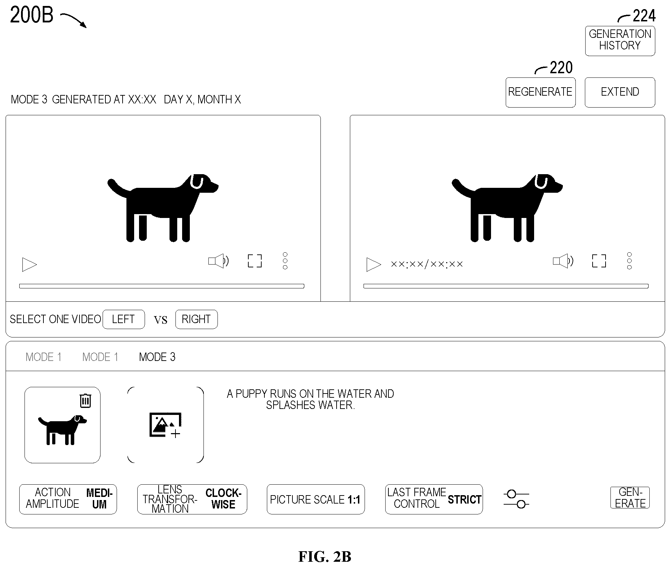

In some embodiments, referring to FIG. 2B and FIG. 2D, the electronic device 110 may jump to a video extension interface based on the user triggering a preset control. In this interface, the user may select one of the above generated videos, and the electronic device 110 may automatically determine the last frame of the video as the reference image to be used as the first frame of the to-be-generated new video, so as to realize extension of the video.

In some embodiments, referring to FIG. 2D, the electronic device 110 may generate two videos for each generation result, and each video has a corresponding random coding sequence 240 (for example, a seed value). The user may copy the random coding sequence 240. If the user wants to regenerate or retrieve the previously generated video subsequently, the video may be retrieved again based on the corresponding coding sequence.

In some embodiments, still referring to FIG. 2B, if the user is not satisfied with the currently generated video, the user may trigger a preset control 220 to regenerate the video.

In this way, the embodiments of the present disclosure can support the user to further control the generated target media content by inputting multiple reference images and prompt words, thereby improving the quality of the generated target media content and enhancing the user experience.

### Example process

FIG. 3 shows a flowchart of an example process 300 of generating media content according to some embodiments of the present disclosure. The process 300 may be implemented at the electronic device 110. The process 300 will be described below with reference to FIG. 1.

As shown, at block 310, the electronic device 110 presents, in response to receiving a content generation request, a configuration interface including at least a first input component and a second input component.

At block 320, the electronic device 110 obtains a plurality of reference images via the first input component, and a prompt item via the second input component.

At block 330, the electronic device 110 generates target media content based on the plurality of reference images and the prompt item, where the target media content includes a plurality of frames corresponding to the plurality of reference images.

In some embodiments, generating the target media content based on the plurality of reference images and the prompt item includes: determining a reference start frame of media content to be generated based on a first image in the plurality of reference images; determining a reference end frame of the media content to be generated based on a second image in the plurality of reference images; and generating the target media content based on the reference start frame, the reference end frame, and the prompt item.

In some embodiments, presenting the configuration interface includes: receiving a selection for a target generation mode among a plurality of candidate generation modes; and presenting the configuration interface corresponding to the target generation mode.

In some embodiments, the configuration interface further includes a third input component, and the method further includes: obtaining at least one media parameter via the third input component, such that the target media content is further generated based on the at least one media parameter.

In some embodiments, the at least one media parameter includes at least one of: a first media parameter indicating an action amplitude of the media content to be generated; a second media parameter indicating lens information of the media content to be generated; and a third media parameter indicating scale information of the media content to be generated.

In some embodiments, the configuration interface further includes a frame control component, and the process 300 further includes: determining a target reference image in the plurality of reference images as an end frame of the target media content in response to the frame control component indicating a target control mode.

In some embodiments, positions of the plurality of frames in the target media content are determined based on a configuration operation.

In some embodiments, obtaining the plurality of reference images via the first input component includes: determining a target image in existing video content as the reference image in the plurality of reference images based on a selection of the existing video content.

### Example apparatus and device

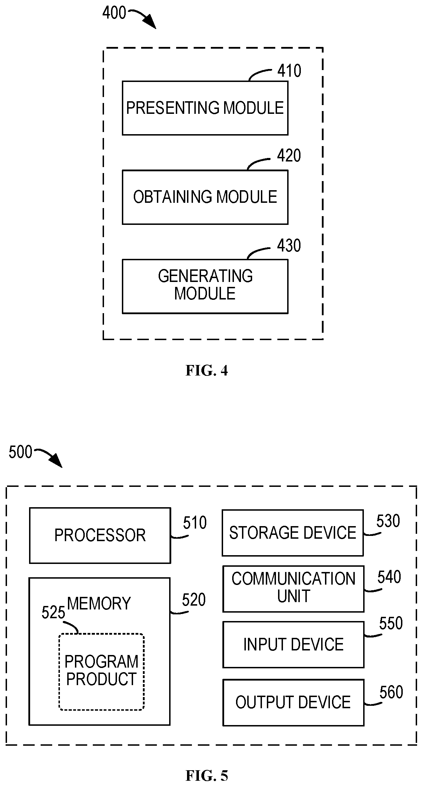

The embodiments of the present disclosure further provide a corresponding apparatus for implementing the above method or process. FIG. 4 shows a schematic structural block diagram of an example apparatus 400 for generating media content according to some embodiments of the present disclosure. The apparatus 400 may be implemented as or included in the electronic device 110. Various modules/components in the apparatus 400 may be implemented by hardware, software, firmware, or any combination thereof.

As shown in FIG. 4, the apparatus 400 includes a presenting module 410 configured to in response to receiving a content generation request, present a configuration interface including at least a first input component and a second input component; an obtaining module 420 configured to obtain a plurality of reference images via the first input component, and a prompt item via the second input component; and a generating module 430 configured to generate target media content based on the plurality of reference images and the prompt item, where the target media content includes a plurality of frames corresponding to the plurality of reference images.

In some embodiments, the generating module 430 is further configured to determine a reference start frame of media content to be generated based on a first image in the plurality of reference images; determine a reference end frame of the media content to be generated based on a second image in the plurality of reference images; and generate the target media content based on the reference start frame, the reference end frame, and the prompt item.

In some embodiments, presenting the configuration interface includes: receiving a selection for a target generation mode among a plurality of candidate generation modes; and presenting the configuration interface corresponding to the target generation mode.

In some embodiments, the configuration interface further includes a third input component, and the apparatus 400 further includes a processing module configured to obtain at least one media parameter via the third input component, such that the target media content is further generated based on the at least one media parameter.

In some embodiments, the at least one media parameter includes at least one of: a first media parameter indicating an action amplitude of the media content to be generated; a second media parameter indicating lens information of the media content to be generated; and a third media parameter indicating scale information of the media content to be generated.

In some embodiments, the configuration interface further includes a frame control component, and the apparatus 400 further includes a determination module configured to determine a target reference image in the plurality of reference images as an end frame of the target media content in response to the frame control component indicating a target control mode.

In some embodiments, positions of the plurality of frames in the target media content are determined based on a configuration operation.

In some embodiments, the obtaining module 420 is further configured to determine a target image in existing video content as the reference image in the plurality of reference images based on a selection of the existing video content.

The modules included in the apparatus 400 may be implemented in various manners, including software, hardware, firmware, or any combination thereof. In some embodiments, one or more units may be implemented by software and/or firmware, for example, machine-executable instructions stored on a storage medium. In addition to or as an alternative to the machine-executable instructions, some or all of the modules in the apparatus 400 may be implemented, at least in part, by one or more hardware logic components. As an example, but not a limitation, exemplary types of hardware logic components that may be used include a field-programmable gate array (FPGA), an application-specific integrated circuit (ASIC), an application-specific standard product (ASSP), a system on chip (SOC), a complex programmable logical device (CPLD), etc.

FIG. 5 shows a block diagram of an electronic device 500 in which one or more embodiments of the present disclosure may be implemented. It should be understood that the electronic device 500 shown in FIG. 5 is only exemplary, and should not constitute any limitation to the functions and scope of the embodiments described herein. The electronic device 500 shown in FIG. 5 may be used to implement the electronic device 110 of FIG. 1.

As shown in FIG. 5, the electronic device 500 is in the form of a general-purpose electronic device. The components of the electronic device 500 may include, but are not limited to, one or more processors or processing units 510, a memory 520, a storage device 530, one or more communication units 540, one or more input devices 550, and one or more output devices 560. The processor 510 may be an actual or virtual processor and can execute various processing according to a program stored in the memory 520. In a multi-processor system, multiple processing units execute computer-executable instructions in parallel to improve the parallel processing capability of the electronic device 500.

The electronic device 500 typically includes multiple computer storage media. Such media may be any available media accessible by the electronic device 500, including but not limited to volatile and non-volatile media, removable and non-removable media. The memory 520 may be volatile memory (for example, a register, a cache, a random access memory (RAM)), non-volatile memory (for example, a read-only memory (ROM), an electrically erasable programmable read-only memory (EEPROM), a flash memory), or some combination thereof. The storage device 530 may be a removable or non-removable medium, and may include a machine-readable medium, such as a flash drive, a magnetic disk, or any other medium, which may be used to store information and/or data and may be accessed within the electronic device 500.

The electronic device 500 may further include additional removable/non-removable, volatile/non-volatile storage media. Although not shown in FIG. 5, a magnetic disk drive for reading from or writing to a removable, non-volatile magnetic disk (e.g., a "floppy disk"), and an optical disk drive for reading from or writing to a removable, non-volatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 enables communication with other electronic devices through a communication medium. Additionally, the functions of the components of the electronic device 500 may be implemented in a single computing cluster or multiple computing machines that can communicate through communication connections. Therefore, the electronic device 500 may operate in a networked environment using a logical connection to one or more other servers, network personal computers (PC) or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not shown) through the communication unit 540 as needed, such as a storage device, a display device, etc., communicate with one or more devices that enable the user to interact with the electronic device 500, or communicate with any device that enables the electronic device 500 to communicate with one or more other electronic devices (e.g., a network card, a modem, etc.). Such communication may be performed via an input/output (I/O) interface (not shown).

According to an exemplary implementation of the present disclosure, there is provided a computer-readable storage medium having computer-executable instructions stored thereon, where the computer-executable instructions are executed by a processor to implement the above-described method. According to an exemplary implementation of the present disclosure, there is also provided a computer program product tangibly stored on a non-transitory computer-readable medium and including computer-executable instructions, and the computer-executable instructions are executed by a processor to implement the above-described method.

Various aspects of the present disclosure are described herein with reference to flowcharts and/or block diagrams of the method, apparatus, device and computer program product implemented according to the present disclosure. It should be understood that each block of the flowchart and/or block diagram and combinations of blocks in the flowchart and/or block diagram may be implemented by computer-readable program instructions.

These computer-readable program instructions may be provided to the processing unit of a general-purpose computer, a special-purpose computer or other programmable data processing apparatus to produce a machine, such that the instructions, when executed by the processing unit of the computer or other programmable data processing apparatus, produce an apparatus for implementing the functions/actions specified in one or more blocks of the flowchart and/or block diagram. These computer-readable program instructions may also be stored in a computer-readable storage medium. These instructions cause the computer, programmable data processing apparatus and/or other devices to work in a specific manner, so that the computer-readable medium storing the instructions includes an article of manufacture, which includes instructions for implementing various aspects of the functions/actions specified in one or more blocks of the flowchart and/or block diagram.

The computer-readable program instructions may be loaded onto the computer, other programmable data processing apparatus or other device to cause a series of operational steps to be executed on the computer, other programmable data processing apparatus or other device to produce a computer-implemented process, such that the instructions executed on the computer, other programmable data processing apparatus or other device implement the functions/actions specified in one or more blocks of the flowchart and/or block diagram.

The flowcharts and block diagrams in the drawings show the architecture, functionality and operation of possible implementations of systems, methods and computer program products according to multiple implementations of the present disclosure. In this regard, each block in the flowcharts or block diagrams may represent a module, a program segment or a portion of instructions, and the module, the program segment or the portion of instructions contains one or more executable instructions for implementing specified logical functions. In some alternative implementations, the functions noted in the blocks may also occur in a different order from the order noted in the drawings. For example, two consecutive blocks may, in fact, be executed substantially concurrently, or the blocks may sometimes be executed in a reverse order, depending on the functionality involved. It should also be noted that each block of the block diagrams and/or flowcharts, and combinations of blocks in the block diagrams and/or flowcharts, may be implemented by a dedicated hardware-based system that performs the specified functions or actions, or a combination of dedicated hardware and computer instructions.

Various implementations of the present disclosure have been described above, and the above description is exemplary, not exhaustive, and is not limited to the disclosed implementations. Many modifications and variations will be apparent to those of ordinary skill in the art without departing from the scope and spirit of the described implementations. The selection of terms used herein is intended to best explain the principles of the implementations, the practical application, or the improvements in the technology in the market, or to enable other ordinary skilled in the art to understand the various implementations disclosed herein.

## Claims

1. A method (300) for generating media content, comprising:
in response to receiving a content generation request, presenting (310) a configuration interface comprising at least a first input component and a second input component;
obtaining (320) a plurality of reference images via the first input component and a prompt item via the second input component; and
generating (330) a target media content based on the plurality of reference images and the prompt item, wherein the target media content comprises a plurality of frames corresponding to the plurality of reference images.

2. The method (300) of claim 1, wherein generating (330) the target media content based on the plurality of reference images and the prompt item comprises:
determining a reference start frame of media content to be generated based on a first image in the plurality of reference images;
determining a reference end frame of the media content to be generated based on a second image in the plurality of reference images; and
generating the target media content based on the reference start frame, the reference end frame, and the prompt item.

3. The method (300) of claim 1, wherein presenting (310) the configuration interface comprises:
receiving a selection for a target generation mode among a plurality of candidate generation modes; and
presenting the configuration interface corresponding to the target generation mode.

4. The method (300) of claim 1, wherein the configuration interface further comprises a third input component, and the method further comprises:
obtaining at least one media parameter via the third input component, such that the target media content is further generated based on the at least one media parameter.

5. The method (300) of claim 4, wherein the at least one media parameter comprises at least one of:
a first media parameter indicating an action amplitude of the media content to be generated;
a second media parameter indicating lens information of the media content to be generated; or
a third media parameter indicating scale information of the media content to be generated.

6. The method (300) of claim 1, wherein the configuration interface further comprises a frame control component, and the method further comprises:
determining a target reference image in the plurality of reference images as an end frame of the target media content in response to the frame control component indicating a target control mode.

7. The method (300) of claim 1, wherein positions of the plurality of frames in the target media content are determined based on a configuration operation.

8. The method (300) of claim 1, wherein obtaining (320) the plurality of reference images via the first input component comprises:
determining, based on a selection of an existing video content, a target image in the existing video content as the reference image in the plurality of reference images.

9. An apparatus (400) for generating media content, comprising:
a presenting module (410) configured to in response to receiving a content generation request, present a configuration interface comprising at least a first input component and a second input component;
an obtaining module (420) configured to obtain a plurality of reference images via the first input component, and a prompt item via the second input component; and
a generating module (430) configured to generate target media content based on the plurality of reference images and the prompt item, wherein the target media content comprises a plurality of frames corresponding to the plurality of reference images.

10. An electronic device (500), comprising:
at least one processor (510); and
at least one memory (520), wherein the at least one memory (520) is coupled to the at least one processor (510) and stores instructions for execution by the at least one processor (510), and the instructions, when executed by the at least one processor (510), cause the device (500) to perform the method (300) according to any of claims 1 to 8.

11. A computer-readable storage medium having a computer program stored thereon, wherein the computer program is executable by a processor to implement the method according to any of claims 1 to 8.
